# EUROPEAN PATENT APPLICATION

(11) **EP 4 794 099 A1**
(43) Date of publication of application: **19.08.2026**
(21) Application number: 25195266.9
(22) Date of filing: 12.08.2025
(51) Int. Cl.: H01M 50/411, H01M 50/449, H01M 50/46, H01M 50/489, H01M 50/105, H01M 50/414, H01M 50/431, H01M 50/463, H01M 50/586

(54) **ELECTRODE ASSEMBLY AND SECONDARY BATTERY COMPRISING THE SAME**

(30) Priority: 13.02.2025 KR 20250018434
(71) Applicant: Samsung SDI Co., Ltd., Yongin-si, Gyeonggi-do 17084 (KR)
(72) Inventor: KIM, Ho Seong, Yongin-si, Gyeonggi-do 17084 (KR)
(74) Representative: Gulde & Partner

(57) **Abstract**

An electrode assembly according to some embodiments may include a first electrode, a second electrode, and a separator between the first electrode and the second electrode. The separator may include a protrusion protruding from the first electrode and the second electrode, and a protective layer may be disposed on the protrusion.

## Description

### BACKGROUND

### 1. Field

Embodiments relate to an electrode assembly and a secondary battery comprising the electrode assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals (electrically) connected to the electrode assembly.

The information disclosed in this section is provided only for enhancement of understanding of the background of the disclosure and therefore it may contain information that does not form the prior art.

### SUMMARY

Embodiments of the present disclosure provide an electrode assembly, and/or a secondary battery including the electrode assembly, having improved safety.

An electrode assembly according to some embodiments may include a first electrode, a second electrode, and a separator between the first electrode and the second electrode. The separator may include a protrusion protruding from (e.g. beyond) the first electrode and the second electrode, and a protective layer being disposed on the protrusion.

In some embodiments, the protective layer may be disposed on at least one of a top surface or a bottom surface of the separator. In other words, the protective layer may be disposed on a top surface and/or a bottom surface of the separator.

In some embodiments, the protective layer may be spaced apart from the first electrode and the second electrode.

In some embodiments, a melting temperature of the protective layer may be from 130°C to 900°C.

In some embodiments, the protective layer may include polyimide, polypropylene, or ionomer.

In some embodiments, the first electrode may include a first current collector and a first active material layer on the first current collector. The second electrode may include a second current collector and a second active material layer on the second current collector. The protective layer may include a first protective layer adjacent to the first active material layer and a second protective layer adjacent to the second active material layer.

In some embodiments, a thickness of the first protective layer may be greater than or equal to a thickness of the separator and less than or equal to a thickness of the first active material layer, and a thickness of the second protective layer may be greater than or equal to the thickness of the separator and less than or equal to a thickness of the second active material layer. The aforementioned thickness is measured in the stacking direction of the electrode assembly (i.e. the direction in which the electrodes and the separator are stacked or layered).

In some embodiments, the first protective layer may include a region having a different thickness than another region of the first protective layer or the second protective layer may include a region having a different thickness than another region of the second protective layer. The aforementioned thickness is measured in the stacking direction of the electrode assembly (i.e. the direction in which the electrodes and the separator are stacked or layered).

In some embodiments, the protective layer may include a first-a protective layer and a second-a protective layer, the second-a protective layer being closer to the first electrode or the second electrode than the first-a protective layer, and a width of the first-a protective layer being larger than a width of the second-a protective layer. The width may be measured in a direction orthogonal to the stacking direction of the first and second electrode.

A secondary battery according to some embodiments may include a case, an electrode assembly as described in the embodiments above, which is housed (e.g. accommodated) in the case, an electrode tab coupled with the electrode assembly, and a lead coupled with the electrode tab. The electrode assembly may include a first electrode, a second electrode, and a separator between the first electrode and the second electrode. The separator may include a protrusion protruding from the first electrode and the second electrode, a protective layer being disposed on the protrusion.

In some embodiments, the protrusion may include at least one of a first protrusion that overlaps the electrode tab and a second protrusion that does not overlap the electrode tab. Preferably, the protrusion may include a first protrusion that overlaps the electrode tab and a second protrusion that does not overlap the electrode tab.

In some embodiments, the protective layer may be disposed on the first protrusion. The protective layer may be disposed on at least one of a top surface or a bottom surface of the separator.

In some embodiments, the separator may include an overlapping region overlapping the electrode tab. In addition, the first electrode may include a first current collector and a first active material layer on the first current collector, the second electrode may include a second current collector and a second active material layer on the second current collector, the protective layer may include a first protective layer adjacent to the first active material layer and a second protective layer adjacent to the second active material layer, and the first protective layer may include a region having a different thickness than another region of the first protective layer or the second protective layer may include a region having a different thickness than another region of the second protective layer.

In some embodiments, the electrode tab may include a first electrode tab (electrically) connected to the first electrode and a second electrode tab (electrically) connected to the second electrode. The overlapping region may include a first overlapping region overlapping the first electrode tab and a second overlapping region overlapping the second electrode tab, the first protective layer may have a first-first thickness on the first overlapping region and a first-second thickness on a region other than the first overlapping region, and the second protective layer may have a second-first thickness on the second overlapping region and a second-second thickness on a region other than the second overlapping region. The first-first thickness may be greater than the first-second thickness, and the second-first thickness may be greater than the second-second thickness.

In some embodiments, the first electrode may be a positive electrode, the second electrode may be a negative electrode, and a thickness of the first protective layer may be greater than or equal to a thickness of the second protective layer.

In some embodiments, the second-first thickness may be greater than the first-first thickness.

In some embodiments, the first-first thickness may be greater than the second-first thickness.

In some embodiments, the first protective layer further may have a first-third thickness on the second overlapping region, the second protective layer further may have a second-third thickness on the first overlapping region, and a sum of the first-first thickness and the second-third thickness may be greater than a sum of the first-third thickness and the second-first thickness.

In some embodiments, the electrode tab may include a first electrode tab (electrically) connected to the first electrode and a second electrode tab (electrically) connected to the second electrode. The first electrode may be a positive electrode, and the second electrode may be a negative electrode. The first electrode tab and the second electrode tab extend in opposite directions. The separator may include a first-first protrusion overlapping the first electrode tab and a first-second protrusion overlapping the second electrode tab. The protective layer may include a first-first protective layer on the first-first protrusion and a first-second protective layer on the first-second protrusion. A thickness of the first-first protective layer may be greater than a thickness of the first-second protective layer.

In some embodiments, the protective layer may include a first-b protective layer on the first protrusion and a second-b protective layer on the second protrusion, the first-b protective layer and the second-b protective layer extending in different directions.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of exemplary embodiments that follows, and the disclosure is not to be construed as limited to what is shown in such drawings. In the drawings:
FIG. 1 is a perspective view of a secondary battery according to some embodiments of the present disclosure.
FIG. 2 is a side view of an electrode assembly according to some embodiments of the present disclosure.
FIG. 3 is a top view of an electrode assembly according to some embodiments of the present disclosure.
FIGS. 4 to 8 are cross-sectional views taken along region A-A' of FIG. 3 according to some embodiments of the present disclosure.
FIG. 9 is a cross-sectional view taken along region B-B' of FIG. 3 according to some embodiments of the present disclosure.
FIGS. 10 to 14 are top views of an electrode assembly according to some embodiments of the present disclosure.
FIG. 15 illustrates another type of secondary battery to which an electrode assembly according to some embodiments of the present disclosure is applied.
Fig. 16 is a perspective view of a battery module including secondary batteries according to some embodiments of the present disclosure.
FIGS. 17 and 18 are perspective views of a battery pack including battery modules according to some embodiments of the present disclosure.
FIG. 19 is a perspective view of a vehicle including battery packs according to some embodiments of the present disclosure.
FIG. 20 is a side view of a vehicle including battery packs according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Hereinafter, an electrode assembly and a secondary battery according to an embodiment will be described with reference to the drawings.

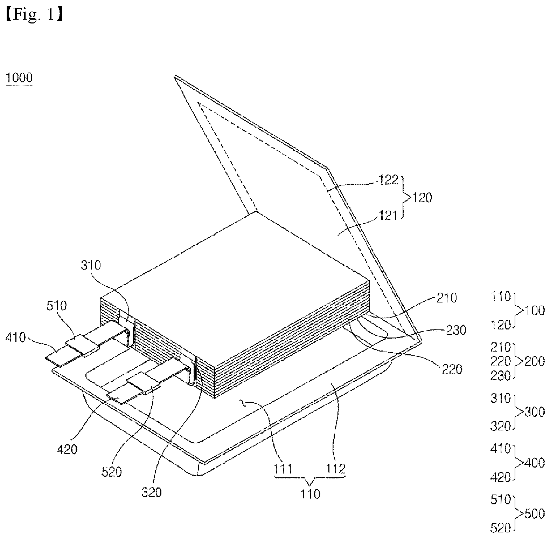

FIG. 1 is a perspective view of a secondary battery according to some embodiments of the present disclosure.

Referring to FIG. 1, the secondary battery according to the embodiment may include a case 100 and an electrode assembly 200.

The case 100 may include a housing part 110 and a cap part 120. The housing part 110 and the cap part 120 may be connected. The case 100 may be formed in a pouch shape.

The housing part 110 may include a concave part 111 and a first sealing region 112. The housing part 110 may include a housing space. The housing part 110 may include an internal bottom surface and an inner side surface formed by the concave part 111. The housing space may be formed by the bottom surface and the inner side surface.

The first sealing region 112 may be disposed at the edge of the housing part 110. A sealing layer may be disposed on the first sealing region 112.

The cap part 120 may include a cover part 121 and a second sealing region 122.

The cover part 121 may cover the housing part 110. The cover part 121 may cover the electrode assembly 200 housed in the housing part 110.

The second sealing region 122 may be disposed at an edge of the cap part 120. The sealing layer may be disposed on the second sealing region 122. The first sealing region 112 and the second sealing region 122 may overlap each other. When the housing part 110 is covered by the cap part 120, the first sealing region 112 and the second sealing region 122 may face each other. Therefore, the housing part 110 and the cap part 120 may be coupled by the sealing layer.

The electrode assembly 200 may be housed in the case 100. The electrode assembly 200 may be housed in the housing space of the case. The electrode assembly 200 may be housed in the housing space together with the electrolyte.

In FIG. 1, an electrode assembly is illustrated as being housed in the case. However, embodiments are not limited thereto. Two or more electrode assemblies may be housed in the case.

The electrode assembly 200 may include a first electrode 210, a second electrode 220, and a separator 230. The electrode assembly 200 may be formed by stacking the first electrode 210, the second electrode 220, and the separator 230. The electrode assembly may be a Z-stack electrode assembly in which the first electrode 210 and the second electrode 220 are inserted on both sides of a separator 230 folded into a Z-stack.

The first electrode 210 may include a first current collector and a first active material layer on the first current collector. The first current collector may include a metal foil such as aluminum or an aluminum alloy. The first active material layer may include a transition metal oxide. Further, the first electrode 210 may be a positive electrode.

The first electrode 210 may be (electrically) connected to a first electrode tab 310. In some embodiments, the first active material layer is not disposed on the first electrode tab 310. The first electrode tab 310 may be welded on the first current collector on which the first active material layer is not disposed. In some embodiments, the first electrode tab 310 may be formed integrally with the first current collector. Further, the first current collector may include a first uncoated portion on which the first active material layer is not disposed. The first uncoated portion may be the first electrode tab 310. The first electrode tab 310 may include the same material as the first current collector. In some embodiments, the first electrode tab 310 may be a substrate tab.

The second electrode 220 may include a second current collector and a second active material layer on the second current collector. The second current collector may include a metal foil such as copper, a copper alloy, nickel, or a nickel alloy. The second active material layer may include graphite or carbon. Further, the second electrode 220 may be a negative electrode.

The second electrode 220 may be (electrically) connected to the second electrode tab 320. The second active material layer is not disposed on the second electrode tab 320. The second electrode tab 320 may be welded on the second current collector on which the second active material layer is not disposed. The second electrode tab 320 may be formed integrally with the second current collector. Further, the second current collector may include a second uncoated portion on which the second active material layer is not disposed. The second uncoated portion may be the second electrode tab 320. The second electrode tab 320 may include the same material as the second current collector. In some embodiments, the second electrode tab 320 may be a substrate tab.

The first electrode tab 310 and the second electrode tab 320 may each be (electrically) connected to a lead. The first electrode tab 310 may be (electrically) connected to a first lead 410. The first electrode tab 310 may be (electrically) connected to the first external terminal by the first lead 410. The second electrode tab 320 may be (electrically) connected to the second lead 420. The second electrode tab 320 may be (electrically) connected to the second external terminal by the second lead 420. The first lead 410 and the first electrode tab may include the same material. The second lead 420 and the second electrode tab may include the same material. The electrode tabs 310, 320 and the leads 410, 420 may be coupled by a welding or adhesive member.

An insulating layer may be disposed on the leads. A first insulating layer 510 may be disposed on the first lead 410. The first insulating layer 510 may be disposed to surround a portion of the first lead 410. A second insulating layer 520 may be disposed on the second lead 420. The second insulating layer 520 may be disposed to surround a portion of the second lead 420. The lead 400 may be insulated from the case 100 by the insulating layer 500. The lead 400 and the case 100 may be easily coupled by the insulating layer 500 and the sealing layer. The first lead 410 and the second lead 420 may be insulated by the insulating layer 500.

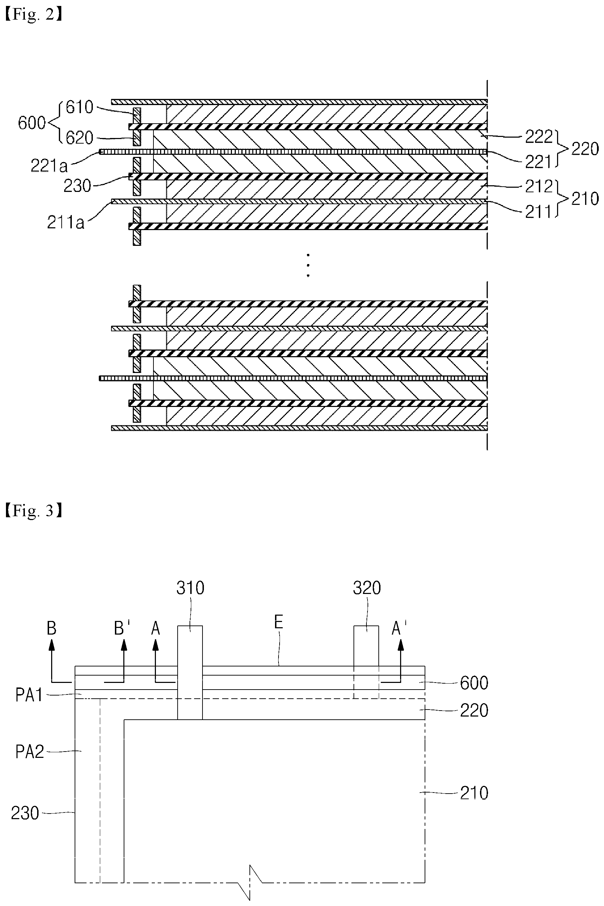

FIG. 2 is a side view of an electrode assembly according to some embodiments of the present disclosure.

The electrode assembly 200 may be formed in a stacking manner. The first electrode 210, the second electrode 220, and the separator 230 may be stacked. For example, the electrode assembly 200 may be a Z-stack electrode assembly. Accordingly, the separator 230 is disposed between the first electrode 210 and the second electrode 220.

The first electrode 210 may include the first current collector 211 including the first uncoated portion 211a, and the first active material layer 212 on the first current collector 211. The first active material layer 212 may be disposed on a region excluding the first uncoated portion 211a. The first uncoated portion 211a may be the first electrode tab 310. The first active material layer 212 may be disposed on at least one of one surface or the other surface of the first current collector 211.

The first active material layer 212 may include a positive electrode active material. As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{d}X_{c}O_{2-α}D_{α} (0.90≤a≤1.8, 0≤b≤0.5, 0≤c≤0.5, and 0<α<2); LiₐNi_{b}Co_{c}L¹_{d}GeO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂GdO₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

A second electrode 220 may include (i) a second current collector 221 including a second uncoated portion 221a and (ii) a second active material layer 222 on the second current collector 221. The second active material layer 222 may be disposed on a region excluding the second uncoated portion 221a. The second uncoated portion 221a may be the second electrode tab 320. The second active material layer 222 may be disposed on at least one of one surface or the other surface of the second current collector 221.

The second active material layer 222 may include a negative electrode active material. The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the positive electrode) and the second electrode plate (e.g., the negative electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO2, Y2O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The first electrode 210 and the second electrode 220 may have different sizes (e.g. in terms of the surface area). Particularly, in some embodiments, the area (e.g. surface area) of the first electrode 210 and the area (e.g. surface area) of the second electrode 220 may be different. Accordingly, the sizes of the first active material layer 212 and the second active material layer 222 may be different. Particularly, in some embodiments, the area of the second active material layer 222 may be larger than the area of the first active material layer 212. The area or surface area of the electrodes may refer to the stacking side area (or contact side area) of essentially layer-shaped electrodes. Thus, when stacked (or layered) in the electrode assembly, the second electrode 220 may protrude beyond the first electrode 210 on at least one side.

In general, the positive electrode has a higher capacity than the negative electrode and the deintercalation/intercalation speed of lithium is faster. Accordingly, when the storage capacity of lithium ions in the negative electrode is insufficient, lithium ions from the positive electrode are not all intercalated into the negative electrode. Therefore, a dendrite phenomenon in which lithium is precipitated on the negative electrode may occur. As the dendrite grows, it may damage the separator. Accordingly, the first electrode 210 and the second electrode 220 may be short-circuited. In order to solve the aforementioned problem, the second electrode 220 may be formed larger than the first electrode 210. Accordingly, a capacity of the second electrode 220 increases, so that the dendrite phenomenon may be reduced or prevented.

A size of the separator 230 may be different from a size of the electrodes 210, 220 (e.g. size in terms of the surface area). The size (e.g. surface area) of the separator 230 may be larger than the size of the electrodes 210, 220. The area or surface area of the separator may refer to the stacking side area (or contact side area) of essentially layer-shaped separator. Thus, when the separator is stacked (or layered) between the electrodes of the electrode assembly, the (area of) separator may protrude beyond the (area of) electrodes on at least one side, and this protruding part of the separator refers to the protrusion, e.g. the first and second protrusion PA1, PA2 as described in the following. Accordingly, the separator 230 may be disposed to (at least completely) cover both the first electrode 210 and the second electrode 220. Therefore, the first electrode 210 and the second electrode 220 may be prevented from being short-circuited due to an error during the process.

The electrode assembly 200 may be tested after manufacturing. For example, the thermal characteristics of the electrode assembly 200 may be tested at a set temperature, as the electrode assembly 200 may generate heat during use. Accordingly, the separator 230 may be deformed by the heat. For example, if the temperature of the heat generated during the test or use is higher than the melting temperature of the separator, the separator may contract. Accordingly, the first electrode and the second electrode may come into contact. Accordingly, the electrode assembly may cause a fire due to a short circuit between the first electrode and the second electrode.

The electrode assembly includes a protective layer 600. Thus, the contraction of the separator may be reduced or prevented by the protective layer. Therefore, safety of the electrode assembly may be improved. In some embodiments, the protective layer 600 may be a heat-resistant layer.

Referring to FIGS. 2 to 8, the protective layer 600 may be disposed on the separator 230. For example, the protective layer 600 may be disposed on at least one of one surface or the other surface of the separator 230. In some embodiments, the protective layer may include at least one of the first protective layer 610 or the second protective layer 620. The first protective layer 610 may be a protective layer adjacent to the first active material layer 212. The second protective layer 620 may be a protective layer adjacent to the second active material layer 222.

As described above, the size of the separator 230 may be larger than sizes of the first electrode 210 and the second electrode 220. Therefore, the separator 230 may include a protrusion. For example, the separator 230 may include a first protrusion PA1 and a second protrusion PA2. The first protrusion PA1 may be a region (or area of the separator) that overlaps with the electrode tab 300. The second protrusion PA2 may be a region (or area of the separator) that does not overlap with the electrode tab 300.

FIG. 3 is a top view of an electrode assembly according to some embodiments of the present disclosure.

The separator 230 includes the first protrusion PA1 and the second protrusion PA2. However, embodiments are not limited thereto; for example, the separator 230 may include at least one of the first protrusion PA1 or the second protrusion PA2.

The protective layer 600 may be disposed on at least one of the first protrusion PA1 or the second protrusion PA2. In some embodiments, protective layer 600 may be disposed on the first protrusion PA1. The protective layer 600 may be spaced apart from the electrode 210, 220. Accordingly, a capacity of the electrode may be prevented from being reduced by the protective layer. The protective layer 600 may be in contact with or spaced apart from an end E of the separator 230.

The protective layer 600 may include a non-conductive material. The protective layer 600 may have a set melting temperature. In some embodiments, the melting temperature of the protective layer may be higher than the temperature of the thermal characteristic test of the electrode assembly. For example, the melting temperature of the protective layer may be from 130°C to 900°C, from 140°C to 850°C, or from 150°C to 800°C. The protective layer 600 may include various materials having a melting temperature in the above ranges. In some embodiments, the protective layer 600 may be polyimide (PI), polypropylene (PP), or ionomer thermoplastic resin (Surlyn^{™} resin by Dow Inc.). Preferably, the protective layer 600 may comprise polyimide (PI) or polypropylene (PP). The ionomer may have various melting temperatures depending on the composition.

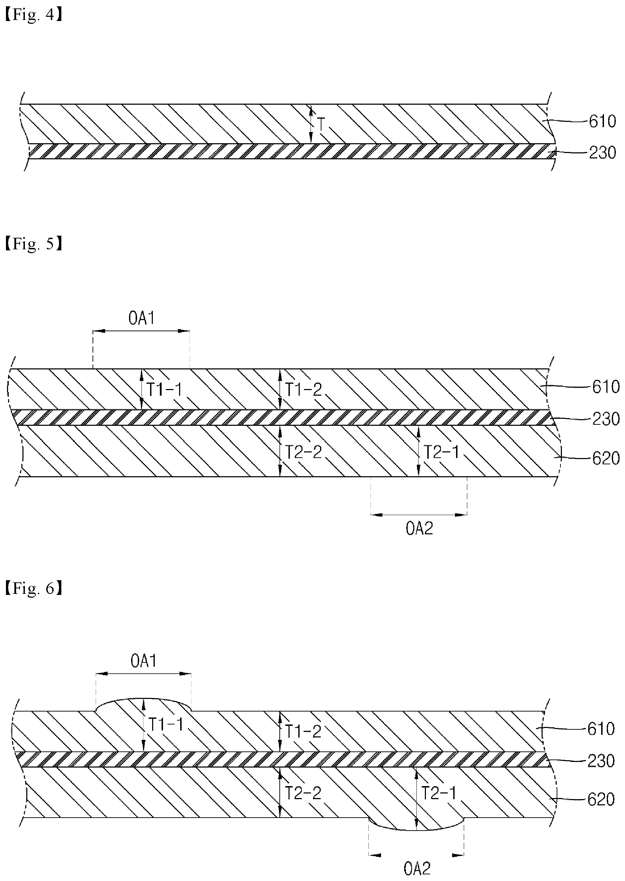

FIGS. 4 to 8 are cross-sectional views taken along region A-A' of FIG. 3 according to some embodiments of the present disclosure.

Referring to FIG. 4, the protective layer 600 may be disposed on one surface of the separator 230.

The protective layer 600 may have a set thickness. The thickness T of the protective layer 600 may be greater than or equal to the thickness of the separator 230. The thickness T of the protective layer 600 may be less than or equal to the thickness of the active material layer. In some embodiments, when the protective layer includes the first protective layer 610, the thickness T of the protective layer may be less than or equal to the thickness of the first active material layer. When the protective layer includes the second protective layer 620, the thickness T of the protective layer may be less than or equal to the thickness of the second active material layer.

The thickness of the separator may be from 8 µm to 12 µm. The thickness of the first active material layer may be from 75 µm to 95 µm. The thickness of the second active material layer may be from 100 µm to 120 µm.

Since the thickness T of the protective layer is controlled within at least one of the set ranges, the thickness of the electrode assembly may be prevented from increasing due to the protective layer.

Referring to FIG. 5, the protective layer 600 may be disposed on both surfaces of the separator 230. The protective layer 600 may include the first protective layer 610 and the second protective layer 620.

The region of the separator 230 may be divided by the electrode tab 300. Particularly, in some embodiments, the separator 230 may include a region overlapping the electrode tab 300. For example, the separator 230 may include a first overlapping region OA1 overlapping the first electrode tab 310, and a second overlapping region OA2 overlapping the second electrode tab 320.

The protective layer 600 may have a set thickness. Further, a thickness of the first protective layer may be greater than or equal to a thickness of the separator and less than or equal to a thickness of the first active material layer. A thickness of the second protective layer may be greater than or equal to the thickness of the separator and less than or equal to a thickness of the second active material layer.

Therefore, the thicknesses of the first protective layer 610 and a thickness of the second protective layer 620 may be the same or different. In some embodiments, the thickness of the second protective layer 620 may be greater than or equal to the thickness of the first protective layer 610. Further, the thickness of the second active material layer may be greater than the thickness of the first active material layer.

Since the thicknesses of the first protective layer and the second protective layer are controlled within the set range, the thickness of the electrode assembly may be prevented from increasing due to the protective layers.

The first protective layer 610 may have a first-first thickness T1-1 and a first-second thickness T1-2. The first-first thickness T1-1 may be a thickness at the first overlapping region OA1. The first-second thickness T1-2 may be a thickness at the region other than the first overlapping region.

The second protective layer 620 may have a second-first thickness T2-1 and a second-second thickness T2-2. The second-first thickness T2-1 may be a thickness at the second overlapping region OA2. The second-second thickness T2-2 may be a thickness at a region other than the second overlapping region.

The first-first thickness T1-1 and the first-second thickness T1-2 may be the same or similar. Likewise, the second-first thickness T2-1 and the second-second thickness T2-2 may be the same or similar. Accordingly, the first protective layer 610 and the second protective layer 620 may be easily formed such as, for example, being formed in one process.

Referring to FIGS. 6 to 8, the first protective layer 610 and the second protective layer 620 may include regions having different thicknesses.

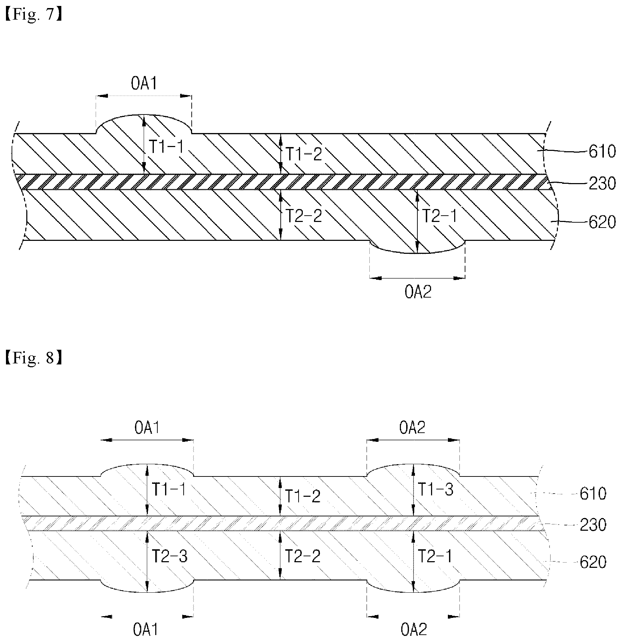

Referring to FIGS. 6 and 7, the first protective layer 610 may include regions having different thicknesses. For example, the first-first thickness T1-1 and the first-second thickness T1-2 may be different. Particularly, in some embodiments, the first-first thickness T1-1 may be greater than the first-second thickness T1-2.

The second protective layer 620 may include regions having different thicknesses. For example, the second-first thickness T2-1 and the second-second thickness T2-2 may be different. Particularly, in some embodiments, the second-first thickness T2-1 may be greater than the second-second thickness T2-2.

The first overlapping region OA1 and the second overlapping region OA2 are regions overlapping the electrode tab 300. The electrode tab 300 includes a conductive material. Accordingly, a temperature of the region of the separator overlapping the electrode tab 300 may be greater than a temperature of the other regions of the separators. Accordingly, the overlapping regions are more likely to contract than the other regions.

Therefore, the first-first thickness T1-1 may be greater than the first-second thickness T1-2, and the second-first thickness T2-1 may be greater than the second-second thickness T2-2. Accordingly, the first overlapping region OA1 and the second overlapping region OA2 may be easily protected by the first protective layer 610 and the second protective layer 620, respectively.

Referring to FIGS. 6 and 7, the first-first thickness T1-1 and the second-first thickness T2-1 may be different.

Referring to FIG. 6, the second-first thickness T2-1 may be greater than the first-first thickness T1-1. As described above, the thickness of the second protective layer may be greater than the thickness of the first protective layer. Accordingly, the second-first thickness T2-1, which is the maximum thickness of the second protective layer, may be greater than the first-first thickness T1-1, which is the maximum thickness of the first protective layer.

Referring to FIG. 7, the first-first thickness T1-1 may be greater than the second-first thickness T2-1. The first electrode tab 310 and the second electrode tab 320 may include different materials. The first electrode tab 310 may include a material having a higher thermal conductivity than the second electrode tab 320. For example, the first electrode tab 310 may include aluminum, and the second electrode tab 320 may include copper or nickel.

Therefore, a temperature of the first overlapping region OA1 may be higher than a temperature of the second overlapping region OA2 due to the first electrode tab 310. Therefore, the first overlapping region OA1 may be contracted better than the second overlapping region OA1.

Accordingly, the first-first thickness T1-1 may be greater than the second-first thickness T2-1. Accordingly, a contraction of the first overlapping region OA1 may be reduced or prevented. In some embodiments, a thickness of the first protective layer 610 may be greater than or equal to a thickness of the second protective layer 620.

Referring to FIG. 8, the first protective layer 610 may include a region having a different thickness. The first protective layer 610 may further include a region having a first-third thickness T1-3. The region having the first-third thickness T1-3 may be a region corresponding to the second overlapping region OA2. The region having the first-first thickness T1-1 is a region overlapping the first electrode tab 310, and the region having the first-third thickness T1-3 is a region overlapping the second electrode tab 320. Since the region having the first-first thickness T1-1 directly faces the first electrode tab 310, heat generated from the first electrode tab may be directly transferred. The region having the first-third thickness T1-3 indirectly faces the second electrode tab 320. Therefore, heat generated in the second electrode tab 320 may be transferred to the region having the first-third thickness T1-3. Therefore, the first-first thickness T1-1 and the first-third thickness T1-3 may be greater than the first-second thickness T1-2.

The second protective layer 620 may include a region having a different thickness. The second protective layer 620 may further include a region having the second-third thickness T2-3. The region having the second-third thickness T2-3 may be a region corresponding to the first overlapping region OA1. The region having the second-first thickness T2-1 is a region overlapping the second electrode tab 320, and the region having the second-third thickness T2-3 is a region overlapping the first electrode tab 310. Since the region having the second-first thickness T2-1 directly faces the second electrode tab 320, heat generated from the second electrode tab may be directly transferred. The region having the second-third thickness T2-3 indirectly faces the first electrode tab 310. Therefore, heat generated from the first electrode tab 310 may be transferred to the region having the second-third thickness T2-3. Therefore, the second-first thickness T2-1 and the second-third thickness T2-3 may be greater than the second-second thickness T2-2.

As described above, temperatures of the overlapping regions of the separator where the electrode tabs are disposed may be greater than temperatures of other regions of the separator. Accordingly, the thickness of the first protective layer and the second protective layer corresponding to the overlapping region may be increased. Accordingly, contraction of the overlapping regions may be reduced or prevented.

The sum of the first-first thickness T1-1 and the second-third thickness T2-3 and the sum of the first-third thickness T1-3 and the second-first thickness T2-1 may be different. The sum of the first-first thickness T1-1 and the second-third thickness T2-3 may be greater than the sum of the first-third thickness T1-3 and the second-first thickness T2-1.

As described above, the first electrode tab 310 may include a material having a higher thermal conductivity than the second electrode tab 320. Therefore, the temperature of the first overlapping region OA1 may be higher than the temperature of the second overlapping region OA2 due to the first electrode tab 310. Therefore, the first overlapping region OA1 is more likely to contract than the second overlapping region OA2.

Accordingly, the sum of the first-first thickness T1-1 and the second-third thickness T2-3 may be greater than the sum of the first-third thickness T1-3 and the second-first thickness T2-1. Therefore, contraction of the first overlapping region OA1 may be reduced or prevented.

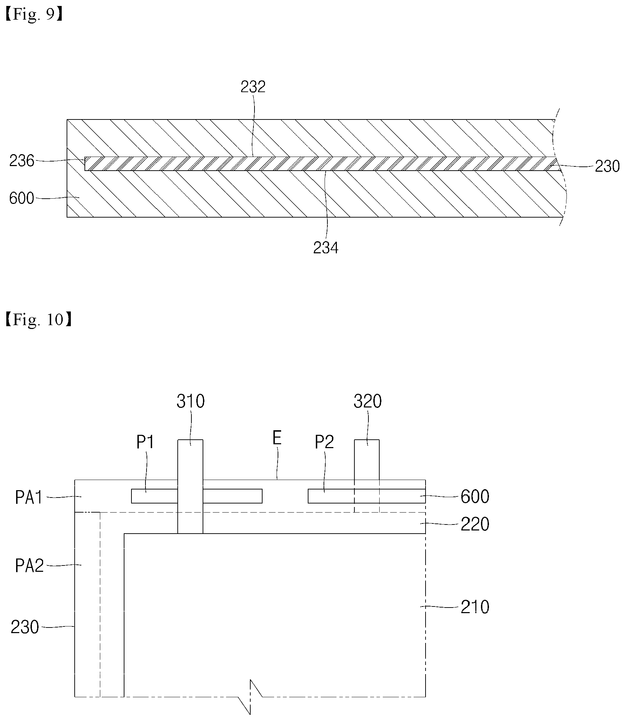

FIG. 9 is a cross-sectional view taken along region B-B' of FIG. 3 according to some embodiments of the present disclosure.

The first protective layer and the second protective layer may be connected. The protective layer 600 may be disposed on a top surface 232, a bottom surface 234, and a side surface 236 of the separator 230. Therefore, the first protective layer and the second protective layer may be formed integrally.

Therefore, the protective layer may be easily formed. The protective layer may be formed on the top surface 232 and the bottom surface 234 of the separator in one process. Therefore, the process efficiency of the electrode assembly may be improved.

In the above description, it has been described that the first electrode tab and the second electrode tab extend in the same direction. However, embodiments are not limited thereto, and the first electrode tab 310 and the second electrode tab 320 may extend in opposite directions.

Accordingly, the first protrusion may include a first-first protrusion overlapping the first electrode tab and a first-second protrusion overlapping the second electrode tab. The protective layer may include the first-first protective layer on the first-first protrusion, and a first-second protective layer on the first-second protrusion.

The first-first protective layer and the first-second protective layer may each include regions having different thicknesses. In some embodiments, the thickness of the first-first protective layer at the region overlapping the first electrode tab may be greater than the thickness of the first-first protective layer at the other region. The thickness of the first-second protective layer at the region overlapping the second electrode tab may be greater than the thickness of the first-second protective layer at the other region. Accordingly, contraction of the separator overlapping the electrode tab may be reduced or prevented.

In some embodiments, the thicknesses of the first-first protective layer and the first-second protective layer may be the same or similar. In other embodiments, the thicknesses of the first-first protective layer and the first-second protective layer may be different. In some embodiments, the thickness of the first-first protective layer may be greater than the thickness of the first-second protective layer. Accordingly, a contraction of the first protrusion by the material of the first electrode tab may be reduced or prevented.

The electrode assembly, in some embodiments, includes the protective layer. The protective layer is disposed on the protrusion of the separator.

The protective layer includes a material having a melting temperature in a set range. The separator may be protected by the protective layer. The protective layer may reduce or prevent heat generated during testing or use of the electrode assembly from being transferred to the separator. Accordingly, the separator may be prevented from contraction by the heat. Accordingly, the first electrode and the second electrode may be prevented from being short-circuited by the separator. Accordingly, a fire in the electrode assembly may be prevented so that safety of the electrode assembly may be improved.

The protective layer may have different thicknesses depending on the region. A temperature of the separator at the region overlapping the electrode tab may be higher than a temperature of the separator at another region. Accordingly, the thickness of the protective layer at the region overlapping the electrode tab may be greater than the thickness of the protective layer at the other region. Accordingly, contraction of the separator at the region overlapping the electrode tab may be reduced or prevented.

A temperature of the separator at the region overlapping the first electrode tab may be higher than the temperature of the separator at the region overlapping the second electrode tab. Accordingly, the thickness of the protective layer at the region overlapping the first electrode tab may be greater than the thickness of the protective layer at the region overlapping the second electrode tab. Accordingly, contraction of the separator in the region overlapping the first electrode tab may be reduced or prevented.

Hereinafter, the electrode assembly according to some embodiment will be described with reference to FIGS. 10 to 13. Commonalities with the embodiments described above will be omitted. In addition, the same or similar drawing reference numbers in FIGS. 10 to 13 are aligned with the same or similar aspects of the reference numbers found above.

FIGS. 10 to 14 are top views of an electrode assembly according to some embodiments of the present disclosure.

The protective layer may include a plurality of patterns. For example, the protective layer may include a first pattern P1 and a second pattern P2. Further, at least one of the first protective layer 610 or the second protective layer 620 may include the first pattern P1 and the second pattern P2. The first pattern P1 may overlap the first electrode tab 310. The second pattern P2 may overlap the second electrode tab 320. The first pattern P1 and the second pattern P2 may be spaced apart from each other.

As described above, the separator 230 may be easily contracted in the region overlapping the electrode tab. Accordingly, the first pattern P1 and the second pattern P2 may be disposed to overlap the electrode tab.

The protective layer 600 may be adjacent to the end E of the separator. Therefore, the end of the separator 230 may be bent by the protective layer 600. The electrode assembly in some embodiments includes a protective layer formed with a plurality of patterns. Therefore, the bending of the separator in one direction by the protective layer may be reduced or prevented.

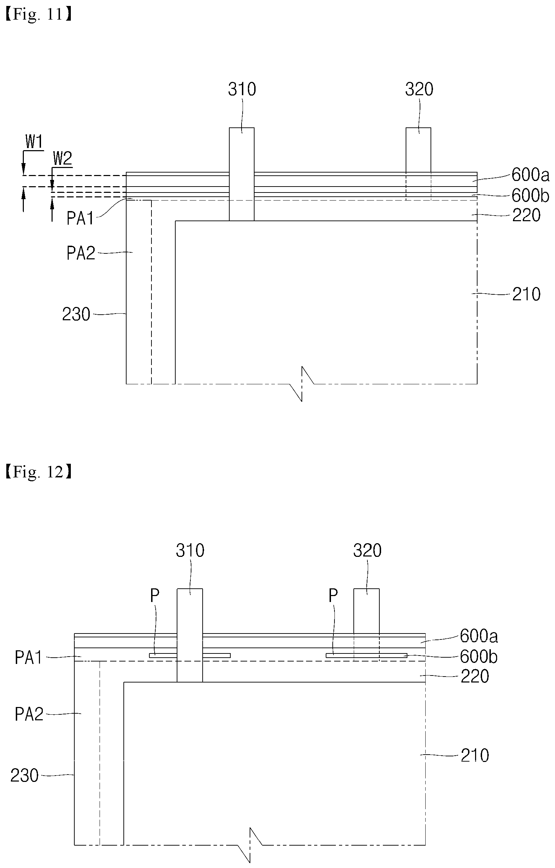

Referring to FIGS. 11 and 12, the protective layer 600 may include a plurality of protective layers. For example, the protective layer 600 may include a first-a protective layer 600a and a second-a protective layer 600b. Further, at least one of the first protective layer 610 or the second protective layer 620 may include the first-a protective layer 600a and the second-a protective layer 600b. The second-a protective layer 600b may be adjacent (or closer to) to the electrode (e.g., the first electrode 210 or the second electrode 220) than the first-a protective layer 600a. Therefore, the second-a protective layer 600b may be disposed between the first-a protective layer 600a and the active material layer.

The first-a protective layer 600a may be a main protective layer. The second-a protective layer 600b may be a sub protective layer. The second-a protective layer 600b may include at least one protective layer.

The first-a protective layer 600a and the second-a protective layer 600b may have different sizes. For example, a width W1 of the first-a protective layer may be larger than a width W2 of the second-a protective layer. The width W1 and W2 may be measured in a direction orthogonal to the stacking direction of the first and second electrodes 210, 220.

The contraction of the separator 230 may be primarily prevented by the first-a protective layer 600a. When forming the protective layer, the adhesive properties of the first-a protective layer 600a may be reduced due to an error during the process. Accordingly, when the electrode assembly is used, the first-a protective layer 600a may be peeled off. The contraction of the separator 230 may be secondarily prevented by the second-a protective layer 600b.

Therefore, the separator may be stably protected. In some embodiments, the separator may include a plurality of protective layers. Accordingly, even if a defect occurs in one of the protective layers, the separator may be protected by the other protective layer. Therefore, the fire of the electrode assembly may be prevented.

Referring to FIG. 12, the first-a protective layer 600a and the second-a protective layer 600b may be formed in different shapes.

The first-a protective layer 600a may be disposed on both a region overlapping the electrode tab and a region not overlapping the electrode tab. The second-a protective layer 600b may include a plurality of patterns P disposed at the region overlapping the electrode tab.

As described above, the region of the separator overlapping the electrode tab is easily contracted. Thus, a plurality of protective layers may be disposed on a region overlapping the electrode tab. Thus, contraction of the separator may be reduced or prevented.

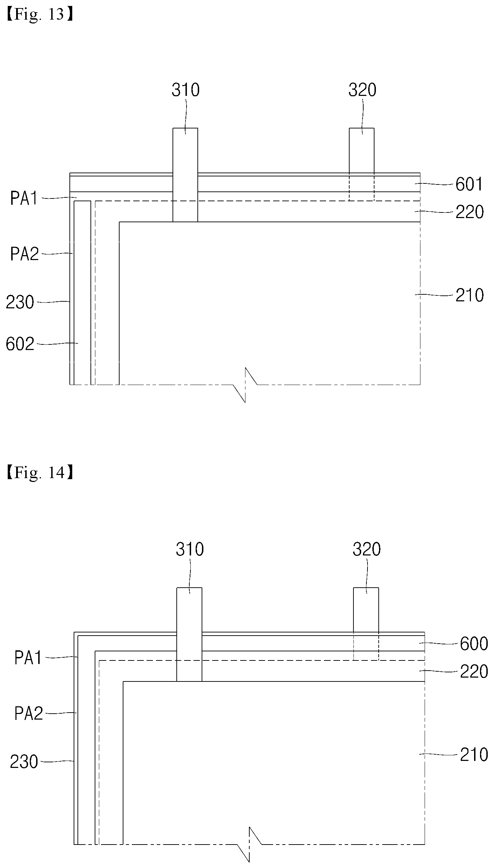

Referring to FIGS. 13 and 14, the protective layer may include a first-b protective layer 601 and a second-b protective layer 602. Further, at least one of the first protective layer 610 or the second protective layer 620 may include the first-b protective layer 601 and the second-b protective layer 602.

The first-b protective layer 601 and the second-b protective layer 602 may extend in different directions. Particularly, in some embodiments, the first-b protective layer 601 and the second-b protective layer 602 may extend in directions perpendicular to each other. The first-b protective layer 601 may be disposed on the first protrusion PA1. The second-b protective layer 602 may be disposed on the second protrusion PA2.

Referring to FIG. 13, the first-b protective layer 601 and the second-b protective layer 602 may be spaced apart. Referring to FIG. 14, the first-b protective layer 601 and the second-b protective layer 602 may be connected to each other and integrally formed.

The contraction of the second protrusion of the separator may be prevented by the second-b protective layer 602.

The first-b protective layer 601 and the second-b protective layer 602 may have different sizes. For example, the width of the first-b protective layer 601 may be larger than the width of the second-b protective layer 602. The first-b protective layer 601 may overlap the electrode tabs. Accordingly, the first protrusion PA1 is more likely to contract than the second protrusion PA2. Therefore, the first-b protective layer 601 may be formed larger than the second-b protective layer 602. Therefore, the safety of the electrode assembly may be improved.

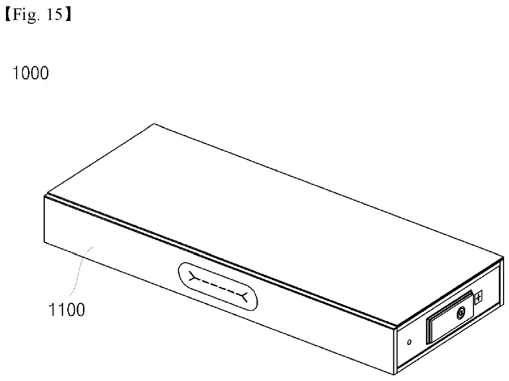

FIG. 15 illustrates another type of secondary battery to which an electrode assembly according to some embodiments of the present disclosure is applied.

The electrode assembly according to the above-described embodiment may be applied to secondary batteries having various shapes. For example, in some embodiments, the electrode assembly may be applied to the pouch-shaped secondary battery of FIG. 1. In other embodiments, the electrode assembly may be applied to the secondary battery 1000 of FIG. 15, which is prismatic. Hence, the electrode assembly may be housed in a prismatic case 1100.

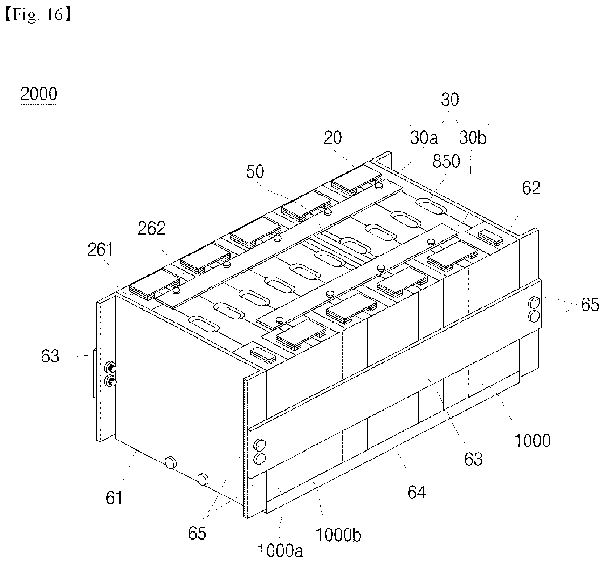

Fig. 16 is a perspective view of a battery module including secondary batteries according to some embodiments of the present disclosure.

Referring to FIG. 16, the battery module 2000 according to one or more example embodiments of the present disclosure includes terminal parts 261 and 262, a plurality of secondary battery 1000 arranged in one direction, a connection tab 20 connecting a secondary battery 1000a to an adjacent secondary battery 1000b, and a protection circuit module 30 having one end connected to the connection tab 20. The protection circuit module 30 may include a battery management system (BMS). Further, the connection tab 20 may include a body portion in contact with the terminal parts 261 and 262 between the adjacent secondary battery 1000a and 1000b and an extension portion extending from the body portion and connected to the protection circuit module 30. The connection tab 20 may be, for example, a bus bar.

Each secondary battery 1000 may include a battery case, an electrode assembly received (or accommodated) in the battery case, and an electrolyte. The electrode assembly and the electrolyte react electrochemically to store and release (e.g., generate) energy. Terminal parts 261 and 262 electrically connected to the connection tab 20 and a vent 850 as a discharge passage for gas generated inside the battery case may be provided on one side of (e.g., an upper side of) the secondary battery 1000. The terminal parts 261 and 262 of the secondary battery 1000 may be a positive electrode terminal 261 and a negative electrode terminal 262 having different polarities from each other, and the terminal parts 261 and 262 of the adjacent secondary battery 1000a and 1000b may be electrically connected to each other in series or parallel by the connection tab 20, to be described in more detail below. Although a serial connection has been described as an example, the connection structure is not limited thereto, and various connection structures may be employed as desired or necessary. In addition, the number and arrangement of secondary battery is not limited to the structure shown in FIG. 16 and may be changed as desired or necessary.

The plurality of secondary batteries 1000 may be arranged in (e.g., may be stacked in) one direction so that the wide surfaces of the secondary batteries 1000 face each other, and the plurality of secondary batteries 1000 may be fixed by the housings 61, 62, 63, and 64. The housings 61, 62, 63, and 64 may include a pair of end plates 61 and 62 facing the wide surfaces of the secondary batteries 1000 and a side plate 63 and a bottom plate 64 connecting the pair of end plates 61 and 62 to each other. The side plate 63 may support side surfaces of the secondary batteries 1000, and the bottom plate 64 may support bottom surfaces of the secondary batteries 1000. In addition, the pair of end plates 61 and 62, the side plate 63 and the bottom plate 64 may be connected by bolts 65 and/or any other suitable fastening members and methods known to those of ordinary skill in the art.

The protection circuit module 30 may have electronic components and protection circuits mounted thereon and may be electrically connected to connection tabs 20, to be described in more detail later. The protection circuit module 30 includes a first protection circuit module 30a and a second protection circuit module 30b extending along the direction in which the plurality of secondary batteries 1000 are arranged in different locations. The first protection circuit module 30a and the second protection circuit module 30b may be spaced from each other at a suitable or desired interval (e.g., a predetermined interval) and arranged parallel to each other to be electrically connected to adjacent connection tabs 20, respectively. For example, the first protection circuit module 30a extends on one side of the upper portion of the plurality of secondary batteries 1000 along the direction in which the plurality of secondary batteries 1000 are arranged, and the second protection circuit module 30b extends to the other upper side of the plurality of secondary batteries 1000 along the direction in which the plurality of secondary batteries 1000 are arranged. The second protection circuit module 30b may be spaced from the first protection circuit module 30a at a suitable or desired interval (e.g., a predetermined interval) with the vents 850 interposed therebetween but may be disposed parallel to the first protection circuit module 30a. As such, the two protection circuit modules are spaced from each other side-by-side along the direction in which the plurality of secondary batteries 1000 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

In addition, the connection member 50 may be or include, for example, an electric wire. In addition, the connection member 50 may be made of or include a material having elasticity or flexibility. By the connecting member 50, it may be possible to check and manage whether the voltage, temperature, and/or current of the plurality of secondary battery 1000 are normal or within a desired range. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 50.

In addition, when a secondary battery 1000 swells, shocks may be absorbed by the elasticity or flexibility of the connection member 50, thereby hindering or preventing the first and second protection circuit modules 30a and 30b from being damaged.

In addition, the shape and structure of the connection member 50 is not limited to the shape and structure shown in FIG. 16.

As described above, because the protection circuit module 30 is provided as the first and second protection circuit modules 30a and 30b, the area of the PCB constituting the protection circuit module can be reduced or minimized, and the space inside the battery module can be secured, which improves work efficiency by facilitating a fastening work for connecting the connection tab 20 and the protection circuit module 30 and repair work when an abnormality is detected in the battery module.

The secondary battery and battery modules according to the previously described example embodiments may be used to manufacture the battery pack.

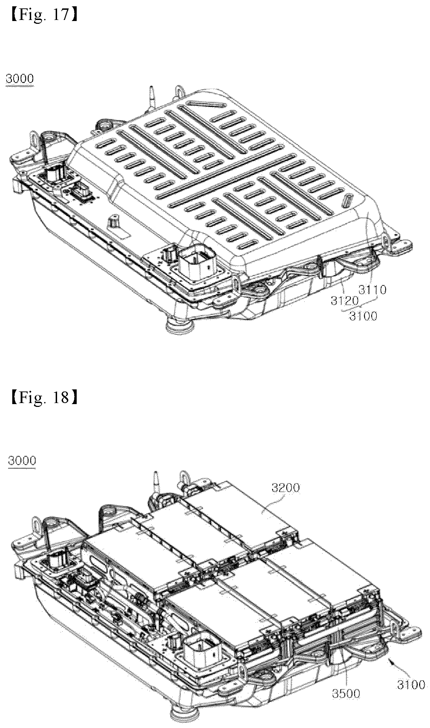

FIGS. 17 and 18 are perspective views of a battery pack including battery modules according to some embodiments of the present disclosure. The battery pack 3000 may include a plurality of battery modules 3200 and a housing 3100 for accommodating the plurality of battery modules 3200. For example, the housing 3100 may include first and second housings 3110 and 3120 coupled in opposite directions through the plurality of battery modules 3200. The plurality of battery modules 3200 may be electrically connected to each other by using a bus bar 3500, and the plurality of battery modules 3200 may be electrically connected to each other in a series/parallel or series-parallel mixed method, thereby obtaining desired (e.g., required) electrical output. In the drawing, for convenience of illustration, parts such as bus bars, cooling units, and external terminals for electrical connection of secondary battery are omitted. In one or more example embodiments, battery pack 3000 may be mounted in a vehicle. The vehicle may be or include, for example, an electric vehicle, a hybrid vehicle, or a plug-in hybrid vehicle. A vehicle may include a four-wheeled vehicle or a two-wheeled vehicle.

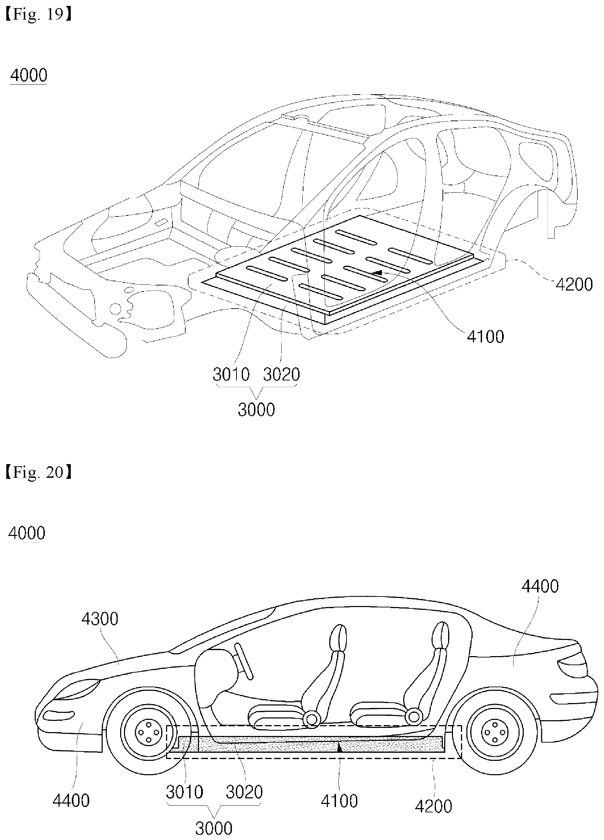

FIG. 19 is a perspective view of a vehicle including battery packs according to some embodiments of the present disclosure.

In FIG. 19, a battery pack 3000 may include a battery pack cover 3010, which is a part of a vehicle underbody 4100 and may correspond to the first housing, and a pack frame 3020, which is disposed under the vehicle underbody 4100 and may corresponding to the second housing. The battery pack cover 3010 and the pack frame 3020 may be, e.g., integrally formed with a vehicle floor 4200. The vehicle underbody 4100 separates the inside and outside of a vehicle, and the pack frame 3020 may be disposed outside the vehicle.

FIG. 20 is a side view of a vehicle including battery packs according to some embodiments of the present disclosure.

In FIG. 20, a vehicle 4000 may be formed by combining additional parts, such as a hood 4300 in front of the vehicle 4000 and fenders 4400 respectively located in the front and rear of the vehicle 4000 to a vehicle body part. The vehicle 4000 may include the battery pack 3000 including the battery pack cover 3010 and the pack frame 3020, and the battery pack 3000 may be coupled to the vehicle body part.

The above descriptions detail some embodiments for implementing a secondary battery according to the present disclosure, but the present disclosure is not limited to the embodiments discussed above. Various modifications can be made by anyone having ordinary skill in the art to which the present disclosure pertains without departing from teachings of the present disclosure.

## Claims

1. An electrode assembly (200) comprising:
a first electrode (210);
a second electrode (220); and
a separator (230) between the first electrode (210) and the second electrode (220),
wherein the separator (230) comprises a protrusion (PA1, PA2) protruding from the first electrode (210) and the second electrode (220), and
a protective layer (600) being disposed on the protrusion (PA1, PA2).

2. The electrode assembly as claimed in claim 1, wherein the protective layer (600) is disposed on at least one of a top surface or a bottom surface of the separator (230).

3. The electrode assembly as claimed in one of claims 1 or 2, wherein the protective layer (600) is spaced apart from the first electrode (210) and the second electrode (220).

4. The electrode assembly as claimed in one of the preceding claims, wherein a melting temperature of the protective layer (600) is from 130°C to 900°C, and preferably the protective layer (600) comprises polyimide, polypropylene, or ionomer.

5. The electrode assembly as claimed in one of the preceding claims, wherein the first electrode (210) comprises a first current collector (211) and a first active material layer (212) on the first current collector (211),
wherein the second electrode (220) comprises a second current collector (221) and a second active material layer (222) on the second current collector (221), and
wherein the protective layer (600) comprises a first protective layer (610) adjacent to the first active material layer (212) and a second protective layer (620) adjacent to the second active material layer (222).

6. The electrode assembly as claimed in claim 5, wherein a thickness of the first protective layer (610) is greater than or equal to a thickness of the separator (230) and less than or equal to a thickness of the first active material layer (212), and a thickness of the second protective layer (620) is greater than or equal to the thickness of the separator (230) and less than or equal to a thickness of the second active material layer (222), wherein the thickness is measured in the stacking direction of the electrode assembly.

7. The electrode assembly as claimed in one of the preceding claims, wherein the protective layer (600) comprises a first-a protective layer (600a) and a second-a protective layer (600b), the second-a protective layer (600b) being closer to the first electrode (210) or the second electrode (220) than the first-a protective layer (600a), and a width (W1) of the first-a protective layer (600a) being larger than a width (W2) of the second-a protective layer (600b).

8. A secondary battery comprising;
a case (100);
an electrode assembly (200) according to one of the preceding claims housed in the case (100), the electrode assembly (200) further including:
an electrode tab (310, 320) coupled with the electrode assembly (200); and
a lead (410, 420) coupled with the electrode tab (310, 320).

9. The secondary battery as claimed in claim 8, wherein the protrusion comprises at least one of a first protrusion (PA1) that overlaps the electrode tab (310, 320) and a second protrusion (PA2) that does not overlap the electrode tab (310, 320).

10. The secondary battery as claimed in claim 9, wherein the protective layer (600) is disposed on the first protrusion (PA1)).

11. The secondary battery as claimed in one of claims 8 to 10, wherein the separator (230) comprises an overlapping region overlapping the electrode tab (310, 320).

12. The secondary battery as claimed in claim 11, wherein the electrode tab comprises a first electrode tab (310) connected to the first electrode (210) and a second electrode tab (320) connected to the second electrode (220),
wherein the overlapping region comprises a first overlapping region (OA1) overlapping the first electrode tab (310) and a second overlapping region (OA2) overlapping the second electrode tab (320), the first protective layer (610) has a first-first thickness (T1-1) on the first overlapping region (OA1) and a first-second thickness (T1-2) on a region other than the first overlapping region (OA1), and the second protective layer (620) has a second-first thickness (T2-1) on the second overlapping region (OA2) and a second-second thickness (T2-2) on a region other than the second overlapping region (OA2), and
wherein the first-first thickness (T1-1) is greater than the first-second thickness (T1-2), and the second-first thickness (T2-2) is greater than the second-second thickness (T2-2), and
preferably the second-first thickness (T2-1) is greater than the first-first thickness(T1-1), or
the first-first thickness (T1-1) is greater than the second-first thickness (T2-1).

13. The secondary battery as claimed in at least one of the claims 5 to 12, wherein the first electrode (210) is a positive electrode, the second electrode (220) is a negative electrode, and a thickness of the first protective layer (610) is greater than or equal to a thickness of the second protective layer (620).

14. The secondary battery as claimed in claim 12, wherein the first protective layer (610) further has a first-third thickness (T1-3) on the second overlapping region (OA2), the second protective layer (620) further has a second-third thickness (T2-3) on the first overlapping region (OA1), and a sum of the first-first thickness (T1-1) and the second-third thickness (T2-3) is greater than a sum of the first-third thickness (T1-3) and the second-first thickness (T2-3).

15. The secondary battery as claimed in claim 8, wherein the electrode tab comprises a first electrode tab (310) connected to the first electrode (210) and a second electrode tab (320) connected to the second electrode (220),
wherein the first electrode (210) is a positive electrode, and the second electrode (220) is a negative electrode,
wherein the first electrode tab (310) and the second electrode tab (320) extend in opposite directions,
wherein the separator (230) comprises a first-first protrusion overlapping the first electrode tab (310) and a first-second protrusion overlapping the second electrode tab (320),
wherein the protective layer (600) comprises a first-first protective layer on the first-first protrusion and a first-second protective layer on the first-second protrusion, and
wherein a thickness of the first-first protective layer is greater than a thickness of the first-second protective layer.
